# EUROPÄISCHE PATENTANMELDUNG

(11) **EP 3 281 767 A1**
(43) Veröffentlichungstag der Anmeldung: **14.02.2018**
(21) Anmeldenummer: 16183698.6
(22) Anmeldetag: 11.08.2016
(51) Int. Cl.: B29C 47/62, B29B 7/60, B29C 47/00, B29C 47/68, B29C 47/40, B29C 47/60, B29B 7/00, B29C 47/10, B29K 105/04, B29C 35/04

(54) **VERFAHREN UND VORRICHTUNG ZUR HERSTELLUNG EINER FOLIE FÜR ELEKTRISCHE ENERGIESPEICHER**

(71) Anmelder: Coperion GmbH, 70469 Stuttgart (DE)
(72) Erfinder: Wohlfahrt-Laymann, Hendrik, 70569 Stuttgart (DE); Schofer, Jochen, 70435 Stuttgart (DE); Lechner, Frank, 76227 Karlsruhe-Durlach (DE)
(74) Vertreter: Rau, Schneck & Hübner Patentanwälte Rechtsanwälte PartGmbB

(57) **Zusammenfassung**

Bei einem Verfahren zur Herstellung einer Folie (2) für elektrische Energiespeicher, insbesondere für Batterien und Akkumulatoren, wird Polyethylen (5) und erwärmtes Öl (7) durch mindestens eine Zuführöffnung (33, 34) in mindestens zwei Gehäusebohrungen (23) einer Mehrwellen-Schneckenmaschine (3) zugeführt. In den mindestens zwei Gehäusebohrungen (23) sind mindestens zwei Behandlungselementwellen (26) drehantreibbar angeordnet, die jeweils mindestens ein dreigängig ausgebildetes Behandlungselement (43', 44', 45') aufweisen. Mittels der mindestens dreigängigen Behandlungselemente (43', 44', 45') wird durch Drehantreiben der mindestens zwei Behandlungselementwellen (26) aus dem Polyethylen (5) und dem Öl (7) eine Mischung (M) erzeugt. Aus der Mischung (M) wird anschließend die Folie (2) hergestellt. Dadurch, dass erwärmtes Öl (7) zugeführt wird, muss mittels der Mehrwellen-Schneckenmaschine (3) nur noch wenig Energie in das Polyethylen (5) eingebracht werden, um dieses aufzuschmelzen. Durch die mindestens dreigängigen Behandlungselemente (43', 44', 45') wird das Polyethylen (5) und das erwärmte Öl (7) bei geringem Energieeintrag intensiv durchmischt.

## Beschreibung

Die Erfindung betrifft ein Verfahren und eine Vorrichtung zur Herstellung einer Folie für elektrische Energiespeicher, insbesondere für Batterien und Akkumulatoren.

Folien werden in elektrischen Energiespeichern, wie beispielsweise Batterien und Akkumulatoren, zur elektrischen Isolation der Elektroden eingesetzt. Deshalb werden derartige Folien auch als Separatorenfolien bezeichnet. Um den erforderlichen Austausch von Elektronen oder Ionen zu ermöglichen, müssen die Folien eine poröse Struktur mit einer definierten Porosität aufweisen.

Der Erfindung liegt die Aufgabe zugrunde, ein einfaches und energieeffizientes Verfahren zur Herstellung einer Folie für elektrische Energiespeicher zu schaffen.

Diese Aufgabe wird durch ein Verfahren mit den Merkmalen des Anspruchs 1 gelöst. Zur Herstellung der Folie wird eine Mischung aus Polyethylen und Öl mittels einer Mehrwellen-Schneckenmaschine erzeugt. Das Öl wird vor dem Zuführen in die Mehrwellen-Schneckenmaschine erwärmt und anschließend in die mindestens zwei Gehäusebohrungen der Mehrwellen-Schneckenmaschine zugeführt. Das Polyethylen wird der Mehrwellen-Schneckenmaschine als Schüttgut, insbesondere als Pulver zugeführt. Durch das erwärmte Öl wird das in den mindestens zwei Gehäusebohrungen befindliche pulverförmige Polyethylen erwärmt, wodurch zum Aufschmelzen des Polyethylens vergleichsweise wenig Energie mittels der Mehrwellen-Schneckenmaschine in das Polyethylen eingebracht werden muss. Dadurch, dass zumindest ein Teil der Behandlungselemente mindestens dreigängig ausgebildet ist, wird das Polyethylen bzw. nach dem Aufschmelzen die Polyetlrylenschmelze und das Öl intensiv durchmischt. Vorzugsweise sind die mindestens dreigängigen Behandlungselemente dreigängig und/oder viergängig ausgebildet. Aufgrund der mindestens dreigängigen Ausbildung der Behandlungselemente ist es möglich, bei einer vergleichsweise niedrigen Drehzahl der mindestens zwei Behandlungselementwellen eine intensive Durchmischung des Polyethylens bzw. der Polyehtylenschmelze und des Öls zu erzielen. Das Polyethylen wird hierbei nicht thermisch zerstört. Hierdurch wird vergleichsweise wenig Energie in die Mischung eingebracht und dennoch eine intensive Durchmischung erzielt. Das erfindungsgemäße Verfahren zur Herstellung einer Folie für elektrische Energiespeicher ist somit einfach und energieeffizient.

Das Polyethylen ist ausgewählt aus mindestens einem der PolyethylenTypen HMW-PE, UHMW-PE, LD-PE und LLD-PE. Das Öl ist vorzugsweise ein Paraffinöl. Das Polyethylen und das erwärmte Öl werden über eine gemeinsame Zuführöffnung und/oder über separate Zuführöffnungen in die mindestens zwei Gehäusebohrungen zugeführt. Das Polyethylen wird beispielsweise mittels einer gravimetrischen Dosiereinrichtung zugeführt. Das Zuführen des Öls erfolgt beispielsweise mittels mindestens einer Dosierpumpe. Vorzugsweise ist für jede Zuführöffnung, durch die Öl zugeführt wird, eine eigene Dosierpumpe vorgesehen.

Zum Herstellen der Folie wird die erzeugte Mischung durch eine Austragsdüse ausgetragen. Die Austragsdüse ist vorzugsweise als Breitschlitzdüse ausgebildet. Die erzeugte Folie wird anschließend in einem Glättwerk profiliert. Das in der Folie befindliche Öl wird daraufhin in einem Lösungsmittelbad aus der Folie gewaschen, um die in dem Polyethylen gebildete Porenstruktur freizustellen. Die erzeugte Folie wird beispielsweise für die Herstellung von Lithium-Ionen-Batterien und Lithium-Ionen-Akkumulatoren verwendet.

Ein Verfahren nach Anspruch 2 gewährleistet eine einfache und energieeffiziente Herstellung. Das Öl wird mittels einer Vorwärmeinrichtung erwärmt, die der Mehrwellen-Schneckenmaschine vorgeordnet ist. Das erwärmte Öl wird vorzugsweise mittels mindestens einer Dosierpumpe in die Mehrwellen-Schneckenmaschine zugeführt. Je höher die Temperatur To ist, desto mehr Wärmeenergie gibt das erwärmte Öl in der Mehrwellen-Schneckenmaschine an das Polyethylen ab. Ein zusätzlich erforderlicher Energieeintrag zum Aufschmelzen des Polyethylens mittels der Mehrwellen-Schneckenmaschine wird hierdurch reduziert.

Ein Verfahren nach Anspruch 3 gewährleistet eine einfache und energieeffiziente Herstellung. Die mindestens zwei Behandlungselementwellen werden mit einer vergleichsweise geringen Drehzahl N drehangetrieben. Hierdurch wird ein geringer Energieeintrag in das Polyethylen erzielt. Aufgrund der mindestens dreigängigen Ausbildung der Behandlungselemente wird dennoch eine intensive Durchmischung des Polyethylens und des Öls und somit eine hohe Mischgüte erzielt.

Ein Verfahren nach Anspruch 4 gewährleistet eine einfache und energieeffiziente Herstellung. Vorzugsweise sind die mindestens dreigängigen Behandlungselemente als Knetelemente, insbesondere als Knetscheiben ausgebildet. Die Knetscheiben sind einzeln und/oder einstückig als Knetblock ausgebildet. Durch die mindestens dreigängigen Knetelemente wird in mindestens einer Mischzone in einfacher Weise die intensive Durchmischung des Polyethylens bzw. der Polyetlrylenschmelze und des Öls erzielt.

Durch die mindestens dreigängigen Schneckenelemente wird das Polyethylen und das Öl beim Fördern intensiv durchmischt.

Ein Verfahren nach Anspruch 5 gewährleistet eine einfache und energieeffiziente Herstellung. Dadurch, dass alle Behandlungselemente der mindestens zwei Behandlungselementwellen mindestens dreigängig ausgebildet sind, wird eine optimale Durchmischung des Polyethylens und des Öls erzielt. Vorzugsweise sind alle Behandlungselemente dreigängig und/oder viergängig ausgebildet.

Ein Verfahren nach Anspruch 6 gewährleistet eine einfache Herstellung. Dadurch, dass mittels der mindestens dreigängigen Behandlungselemente eine intensive Durchmischung des Polyethylens und des Öls erzielt wird, ist es möglich, die mindestens zwei Behandlungselementwellen mit einer geringen Länge auszubilden, ohne dass die Mischgüte bzw. die Qualität der Mischung und der daraus hergestellten Folie beeinträchtigt werden würde. Hierdurch wird der maschinentechnische Aufwand erheblich reduziert.

Ein Verfahren nach Anspruch 7 gewährleistet eine einfache und energieeffiziente Herstellung. Aufgrund der intensiven Durchmischung mittels der mindestens dreigängigen Behandlungselemente ist eine vergleichsweise geringe Verweilzeit t_{V} des Polyethylens in der Mehrwellen-Schneckenmaschine ausreichend, um das Polyethylen und das Öl mit der gewünschten Mischgüte zu mischen. Die geringe Verweilzeit wird insbesondere dadurch erzielt, dass eine Länge L der mindestens zwei Behandlungselementwellen vergleichsweise gering ausgebildet wird. Durch die geringe Verweilzeit t_{V} wird zugleich ein hoher Durchsatz erzielt. Die Verweilzeit t_{V} bzw. die minimale Verweilzeit t_{V} wird beispielsweise durch die Zugabe von Farbstoff und zugehörige Zeitmessung bis zum Austragen des Farbstoffs bestimmt.

Ein Verfahren nach Anspruch 8 gewährleistet eine einfache und energieeffiziente Herstellung. Je höher der Volumenanteil an Öl ist, desto höher ist die Porosität der Folie und desto geringer ist der mittels der Mehrwellen-Schneckenmaschine zusätzlich einzubringende Energieeintrag. Vorzugsweise werden 25 Vol.-% bis 55 Vol.-% durch eine erste Zuführöffnung zugeführt und 5 Vol.-% bis 25 Vol.-% durch mindestens eine weitere stromabwärts liegende Zuführöffnung zugeführt. Zusätzlich können in die Mischung Additive und/oder Füllstoffe eingemischt werden, wie beispielsweise Stabilisatoren, Titandioxid oder Kalziumkarbonat.

Ein Verfahren nach Anspruch 9 gewährleistet eine einfache und energieeffiziente Herstellung. Bei einem hohen Volumenanteil an Öl wird eine intensive Durchmischung mit dem Polyethylen vereinfacht, wenn das Öl durch mehrere in einer Förderrichtung beabstandete Zuführöffnungen zugeführt und in mehreren zugehörigen Mischzonen sukzessive mit dem Polyethylen gemischt wird. Stromabwärts zu der jeweiligen Zuführöffnung ist insbesondere eine zugehörige Mischzone ausgebildet, in der die mindestens zwei Behandlungselementwellen mindestens dreigängige Knetelemente aufweisen.

Ein Verfahren nach Anspruch 10 gewährleistet eine einfache und energieeffiziente Herstellung. Durch das Verhältnis von Außendurchmesser D zu Kerndurchmesser d wird eine intensive Durchmischung des Polyethylens und des Öls in Verbindung mit einer hohen Förderkapazität bzw. einem hohen Durchsatz erzielt.

Ein Verfahren nach Anspruch 11 gewährleistet eine einfache und energieeffiziente Herstellung. Dadurch, dass die mindestens zwei Behandlungselementwellen gleichsinnig, also in gleichen Drehrichtungen drehangetrieben sind, wird eine intensive Durchmischung erzielt.

Ein Verfahren nach Anspruch 12 gewährleistet eine einfache und energieeffiziente Herstellung. Dadurch, dass die mindestens zwei Behandlungselementwellen einander dicht kämmend ausgebildet sind, also benachbarte Behandlungselemente einander dicht kämmen und eine die mindestens zwei Gehäusebohrungen begrenzende Innenwand des Gehäuses abstreifen, wird eine intensive Durchmischung des Polyethylens und des Öls gewährleistet. Die Mischung wird an einem jeweiligen Kamm und in einem Zwickelbereich der mindestens zwei Gehäusebohrungen in Teilströme aufgeteilt. Die Zahl der Teilströme wird mit der Gangzahl der Behandlungselemente erhöht.

Ein Verfahren nach Anspruch 13 gewährleistet eine einfache und energieeffiziente Herstellung. Durch die mindestens eine Siebeinrichtung wird die Mischgüte der Mischung in einfacher und energieeffizienter Weise verbessert. Vorzugsweise sind mehrere Siebeinrichtungen vorgesehen, die in der Förderrichtung der Mischung eine gestaffelte Siebfeinheit haben. Beispielsweise ist nach der Mehrwellen-Schneckenmaschine eine Grob-Siebeinrichtung angeordnet, der eine Schmelzepumpe und eine Fein-Siebeinrichtung nachgeordnet ist. Die mindestens eine Siebeinrichtung ist insbesondere als Siebwechseleinrichtung ausgebildet.

Ein Verfahren nach Anspruch 14 gewährleistet eine einfache und energieeffiziente Herstellung. Mittels der Schmelzepumpe wird in einfacher und energieeffizienter Weise der Druck der Mischung zum Austragen durch die Austragsdüse erhöht. Zwischen der Schmelzepumpe und der Austragsdüse ist insbesondere mindestens eine Siebeinrichtung angeordnet, die die Mischgüte der Mischung vor dem Austragen erhöht. Die Schmelzepumpe ist beispielsweise als Zahnradpumpe ausgebildet.

Der Erfindung liegt ferner die Aufgabe zugrunde, eine einfache und energieeffiziente Vorrichtung zur Herstellung einer Folie für elektrische Energiespeicher zu schaffen.

Diese Aufgabe wird durch eine Vorrichtung mit den Merkmalen des Anspruchs 15 gelöst. Die Vorteile der erfindungsgemäßen Vorrichtung entsprechen den bereits beschriebenen Vorteilen des erfindungsgemäßen Verfahrens. Die erfindungsgemäße Vorrichtung kann insbesondere auch mit den Merkmalen mindestens eines der Ansprüche 1 bis 14 weitegebildet werden. Die Mehrwellen-Schneckenmaschine ist insbesondere als Zweiwellen-Schneckenmaschine ausgebildet. Die Vorrichtung weist insbesondere eine Steuereinrichtung und/oder eine gravimetrische Dosiereinrichtung zum Zuführen von Polyethylen und/oder mindestens eine Dosierpumpe zum Zuführen des erwärmten Öls und/oder mindestens eine Siebeinrichtung zum Reinigen der Mischung und/oder eine Schmelzepumpe und/oder eine Austragsdüse auf. Die Steuereinrichtung dient insbesondere zum Steuern der Vorwärmeinrichtung und/oder der Mehrwellen-Schneckenmaschine und/oder der gravimetrischen Dosiereinrichtung und/oder der mindestens einen Dosierpumpe und/oder der mindestens einen Siebeinrichtung und/oder der Schmelzepumpe. Die Steuereinrichtung steuert die Vorwärmeinrichtung insbesondere derart an, dass das erwärmte Öl die Temperatur To hat. Weiterhin steuert die Steuereinrichtung die Mehrwellen-Schneckenmaschine insbesondere derart an, dass die mindestens zwei Behandlungselementwellen mit der Drehzahl N drehangetrieben werden und/oder das Polyethylen in der Mehrwellen-Schneckenmaschine die mittlere Verweilzeit t_{V} hat. Insbesondere steuert die Steuereinrichtung die gravimetrische Dosiereinrichtung und die mindestens eine Dosierpumpe derart an, dass die Mischung 20 Vol.-% bis 50 Vol.-% Polyethylen und 50 Vol.-% bis 80 Vol.-% Öl umfasst.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnittene schematische Ansicht einer Vorrichtung zur Herstellung einer Folie für elektrische Energiespeicher gemäß einem ersten Ausführungsbeispiel,
- Fig. 2: eine teilweise geschnittene Draufsicht auf die Vorrichtung in Fig. 1,
- Fig. 3: einen Schnitt durch eine Mehrwellen-Schneckenmaschine der Vorrichtung entlang einer Schnittlinie III-III in Fig. 2,
- Fig. 4: eine teilweise geschnittene schematische Ansicht einer Vorrichtung zur Herstellung einer Folie für elektrische Energiespeicher gemäß einem zweiten Ausführungsbeispiel,
- Fig. 5: eine teilweise geschnittene Draufsicht auf die Vorrichtung in Fig. 4, und
- Fig. 6: einen Schnitt durch eine Mehrwellen-Schneckenmaschine der Vorrichtung entlang einer Schnittlinie VI-VI in Fig. 5.

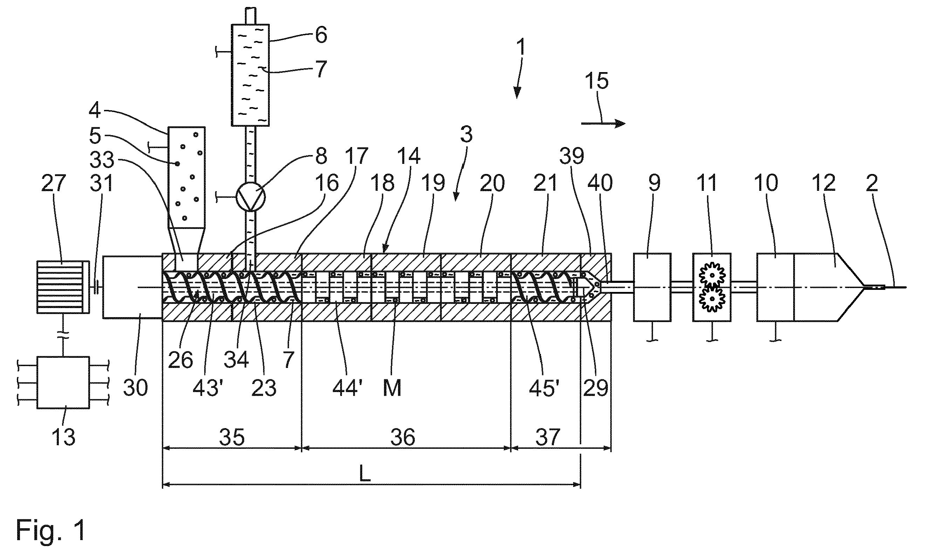

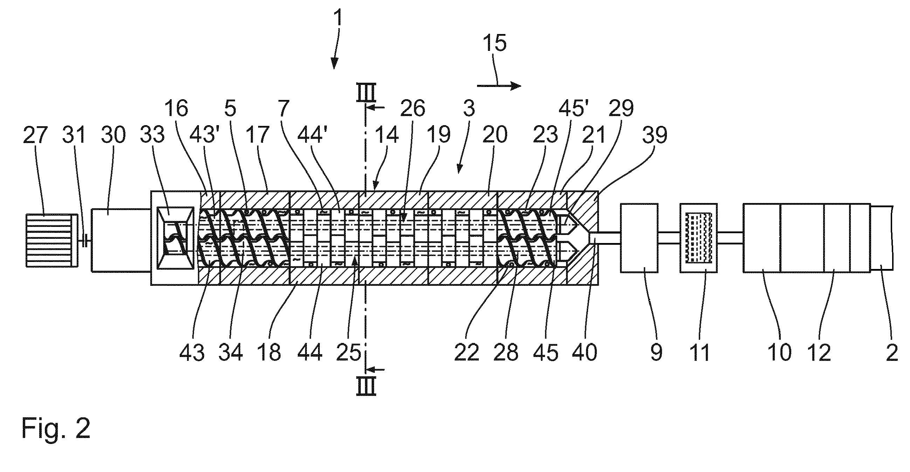

Nachfolgend ist anhand der Fig. 1 bis 3 ein erstes Ausführungsbeispiel der Erfindung beschrieben. Eine Vorrichtung 1 zur Herstellung einer Folie 2 für elektrische Energiespeicher umfasst eine Mehrwellen-Schneckenmaschine 3, eine gravimetrische Dosiereinrichtung 4 zum Zuführen von Polyethylen 5, eine Vorwärmeinrichtung 6 zum Erwärmen von Öl 7, eine Dosierpumpe 8 zum Zuführen des erwärmten Öls 7, zwei Siebeinrichtungen 9, 10, eine Schmelzepumpe 11, eine Austragsdüse 12 und eine Steuereinrichtung 13.

Die Mehrwellen-Schneckenmaschine 3 weist ein Gehäuse 14 aus mehreren in einer Förderrichtung 15 nacheinander angeordneten und als Gehäuseschüssen bezeichneten Gehäuseabschnitten 16 bis 21 auf. Die Gehäuseabschnitte 16 bis 21 sind zur Ausbildung des Gehäuses 14 miteinander verbunden.

Die Mehrwellen-Schneckenmaschine 3 ist als Zweiwellen-Schneckenmaschine ausgebildet. In dem Gehäuse 14 sind zwei zueinander parallele und einander durchdringende Gehäusebohrungen 22, 23 ausgebildet, die im Querschnitt die Form einer liegenden Acht haben und in ihrem Durchdringungsbereich sogenannte Zwickelbereiche 24 ausbilden. In den Gehäusebohrungen 22, 23 sind konzentrisch zwei Behandlungselementwellen 25, 26 angeordnet, die von einem Antriebsmotor 27 um zugehörige Drehachsen 28, 29 drehantreibbar sind. Zwischen den Behandlungselementwellen 25, 26 und dem Antriebsmotor 27 ist ein Verzweigungsgetriebe 30 angeordnet, wobei wiederum zwischen dem Antriebsmotor 27 und dem Verzweigungsgetriebe 30 eine Kupplung 31 angeordnet ist. Die Behandlungselementwellen 25, 26 werden gleichsinnig, also in gleichen Drehrichtungen 32 um die Drehachsen 28, 29 angetrieben.

In dem dem Verzweigungsgetriebe 30 benachbarten ersten Gehäuseabschnitt 16 ist eine erste Zuführöffnung 33 ausgebildet, durch die das pulverförmige Polyethylen 5 mittels der Dosiereinrichtung 4 in die Gehäusebohrungen 22, 23 zuführbar ist. Weiterhin ist in dem benachbarten zweiten Gehäuseabschnitt 17 eine zweite Zuführöffnung 34 ausgebildet, durch die das erwärmte Öl 7 mittels der Dosierpumpe 8 in die Gehäusebohrungen 22, 23 zuführbar ist. Das Öl 7 wird mittels der Vorwärmeinrichtung 6 erwärmt, die der Dosierpumpe 8 vorgeordnet ist.

Die Schneckenmaschine 3 weist in der Förderrichtung 15 nacheinander eine Einzugszone 35, eine Aufschmelz- und Mischzone 36 und eine Druckaufbauzone 37 auf. An dem letzten Gehäuseabschnitt 21 ist eine Abschlussplatte 39 angeordnet, die eine Austragsöffnung 40 ausbildet.

Die Behandlungselementwellen 25, 26 sind einander dicht kämmend ausgebildet. Die Behandlungselementwellen 25, 26 weisen Wellen 41, 42 auf, auf denen in der Förderrichtung 15 nacheinander Behandlungselemente drehfest angeordnet sind. In der Einzugszone 35 sind Schneckenelemente 43, 43', in der Aufschmelz- und Mischzone 36 Knetelemente 44, 44' und in der Druckaufbauzone 37 Schneckenelemente 45, 45' als Behandlungselemente drehfest auf den Wellen 41, 42 angeordnet. Die Knetelemente 44, 44' sind beispielsweise als einzelne Knetscheiben und/oder als mindestens ein Knetblock mit mehreren einstückig miteinander verbundenen Knetscheiben ausgebildet.

Zum intensiven Durchmischen des Polyethylens 5 und des erwärmten Öls 7 und zum Erzeugen einer Mischung M mit einer hohen Mischgüte sind alle Behandlungselemente 43, 43', 44, 44', 45, 45' dreigängig ausgebildet.

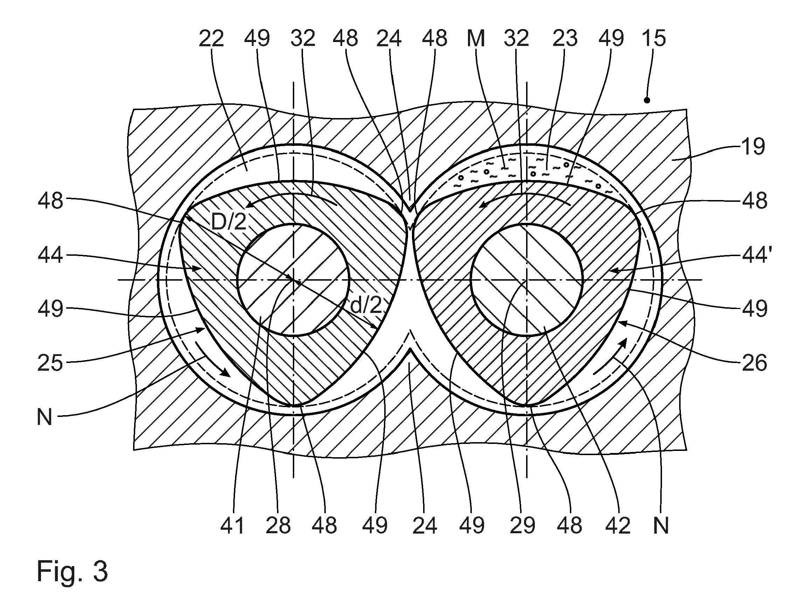

Die dreigängige Ausbildung ist am Beispiel der Knetelemente 44, 44' in Fig. 3 veranschaulicht. Die dreigängigen Behandlungselemente 43, 43', 44, 44', 45, 45' weisen drei in gleichen Winkelabständen zueinander angeordnete Kämme 48 auf, die durch Kurvenabschnitte 49 miteinander verbunden sind. Die Behandlungselementwellen 25, 26 weisen einen Außendurchmesser D und einen Kerndurchmesser d auf, wobei für das Verhältnis D/d gilt: 1,1 ≤ D/d ≤ 1,3. Ferner weisen die Behandlungselementwellen 25, 26 im Bereich der Behandlungselemente 43, 43', 44, 44', 45, 45' eine Länge L auf, wobei für das Verhältnis L/D gilt: 20 ≤ L/D ≤ 48, insbesondere 24 ≤ L/D ≤ 40, und insbesondere 28 ≤ L/D ≤ 36. Der Außendurchmesser D der Behandlungselementwellen 25, 26 beträgt beispielsweise 120 mm.

Die erste Siebeinrichtung 9 ist in der Förderrichtung 15 nach der Schneckenmaschine 3 angeordnet. Die erste Siebeinrichtung 9 ist im Vergleich zu der zweiten Siebeinrichtung 10 als Grob-Siebeinrichtung ausgebildet. Die Schmelzepumpe 11 ist in der Förderrichtung 15 nach der ersten Siebeinrichtung 9 angeordnet. Die Schmelzepumpe 11 ist beispielsweise als Zahnradpumpe ausgebildet. Die Schmelzepumpe 11 dient zum Druckaufbau und Fördern durch die zweite Siebeinrichtung 10. Die zweite Siebeinrichtung 10 ist in der Förderrichtung 15 nach der Schmelzepumpe 11 angeordnet. Im Vergleich zu der ersten Siebeinrichtung 9 ist die zweite Siebeinrichtung 10 als Fein-Siebeinrichtung ausgebildet. Vorzugsweise sind die Siebeinrichtungen 9, 10 als Siebwechseleinrichtungen mit wechselbaren Siebelementen ausgebildet.

Die Austragsdüse 12 ist in der Förderrichtung 15 nach der zweiten Siebeinrichtung 10 angeordnet. Zur Herstellung der Folie 2 ist die Austragsdüse 12 als Schlitzdüse ausgebildet.

Die Steuereinrichtung 13 dient zur Steuerung der Schneckenmaschine 3, der Dosiereinrichtung 4, der Vorwärmeinrichtung 6, der Dosierpumpe 8, der Siebeinrichtungen 9, 10 und der Schmelzepumpe 11. Die Steuereinrichtung 13 ist insbesondere in Signalverbindung mit dem Antriebsmotor 27, der Dosiereinrichtung 4, der Vorwärmeinrichtung 6, der Dosierpumpe 8, der Siebeinrichtungen 9, 10 und/oder der Schmelzepumpe 11.

Die Funktionsweise der Vorrichtung 1 und die Herstellung einer Folie 2 ist wie folgt:
Das pulverförmige Polyethylen 5 wird mittels der Dosiereinrichtung 4 durch die erste Zuführöffnung 33 in die Gehäusebohrungen 22, 23 eingeführt. Das Öl 7 wird vor dem Zuführen mittels der Vorwärmeinrichtung 6 erwärmt. Beim Zuführen hat das Öl 7 eine Temperatur To, wobei gilt: 40°C ≤ T_{O} ≤ 150 °C, insbesondere 70°C ≤ T_{O} ≤ 120 °C, und insbesondere 80°C ≤ T_{O} ≤ 110 °C. Das Zuführen des erwärmten Öls 7 in die Gehäusebohrungen 22, 23 erfolgt mittels der Dosierpumpe 8 durch die zweite Zuführöffnung 34.

In der Einzugszone 35 wird das Polyethylen 5 und das erwärmte Öl 7 zu der Aufschmelz- und Mischzone 36 gefördert. Hierbei wird das pulverförmige Polyethylen 5 und das erwärmte Öl 7 zumindest teilweise vermischt, wobei das erwärmte Öl 7 Wärmeenergie an das pulverförmige Polyethylen 5 abgibt und dieses erwärmt.

In der Aufschmelz- und Mischzone 36 wird mittels der Knetelemente 44, 44' Energie in das Polyethylen 5 und das Öl 7 eingebracht, sodass das pulverförmige Polyethylen 5 aufschmilzt und mit dem Öl 7 zu einer Mischung M vermischt wird. In der Mischung M ist das Öl 7 insbesondere fein in der Polyetlrylenschmelze dispergiert. Die mindestens zwei Behandlungselementwellen 25, 26 werden mit einer Drehzahl N drehangetrieben, wobei für die Drehzahl N gilt: 10 U/min ≤ N ≤ 200 U/min, insbesondere 20 U/min ≤ N ≤ 100 U/min, und insbesondere 30 U/min ≤ N ≤ 50 U/min. Durch die dreigängigen Behandlungselemente 43, 43', 44, 44', 45, 45' wird das Polyethylen 5 und das Öl 7 trotz der vergleichsweise geringen Drehzahl N intensiv durchmischt. Aufgrund der geringen Drehzahl N ist der Energieeintrag in das Polyethylen 5 in der Schneckenmaschine 3 gering, sodass das Polyethylen 7 thermisch nicht zerstört wird.

Infolge der vergleichsweise geringen Länge L hat das Polyethylen 5 eine Verweilzeit t_{V} in der Schneckenmaschine 3, wobei für diese gilt: 100 s ≤ t_{V} ≤ 240 s, insbesondere 120 s ≤ t_{V} ≤ 210 s, und insbesondere 140 s ≤ t_{V} ≤ 180 s. Hierdurch wird ein geringer Energieeintrag und ein vergleichsweise hoher Durchsatz erzielt. Aufgrund der dreigängigen Behandlungselemente 43, 43', 44, 44', 45, 45' wird das Polyethylen 5 und das Öl 7 dennoch intensiv durchmischt.

Die Mischung M umfasst 20 Vol.-% bis 50 Vol.-% Polyethylen 5 und 50 Vol.-% bis 80 Vol.-% Öl 7. In die Mischung M können Füllstoffe und/oder Additive eingemischt werden, die bei den vorgenannten Volumenanteilen nicht berücksichtigt sind.

In der Druckaufbauzone 37 wird ein Druck in der Mischung M erzeugt und die Mischung M durch die erste Siebeinrichtung 9 gefördert. In der ersten Siebeinrichtung 9 wird die Mischung M gereinigt und etwaig vorhandene Agglomerate zerteilt. Mittels der Schmelzepumpe 11 wird die Mischung M anschließend durch die zweite Siebeinrichtung 10 gefördert und dort in entsprechender Weise nochmals gereinigt und etwaige Agglomerate zerteilt. Hierzu ist die zweite Siebeinrichtung 10 als Fein-Siebeinrichtung ausgebildet, wohingegen die erste Siebeinrichtung 9 als Grob-Siebeinrichtung ausgebildet ist. Anschließend wird die gereinigte Mischung M durch die Austragsdüse 12 ausgetragen und so die Folie 2 hergestellt. Die Folie 2 dient als sogenannte Separatorenfolie und wird zur Herstellung von elektrischen Energiespeichern, wie beispielsweise Lithium-Ionen-Batterien oder Lithium-Ionen-Akkumulatoren verwendet. Der Durchsatz der Vorrichtung 1 beträgt beispielsweise 700 bis 800 kg/h.

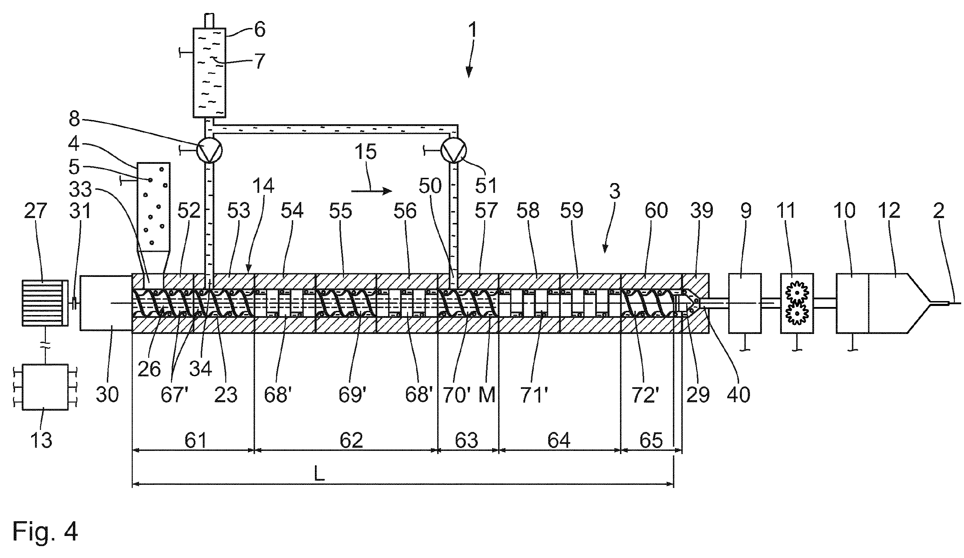

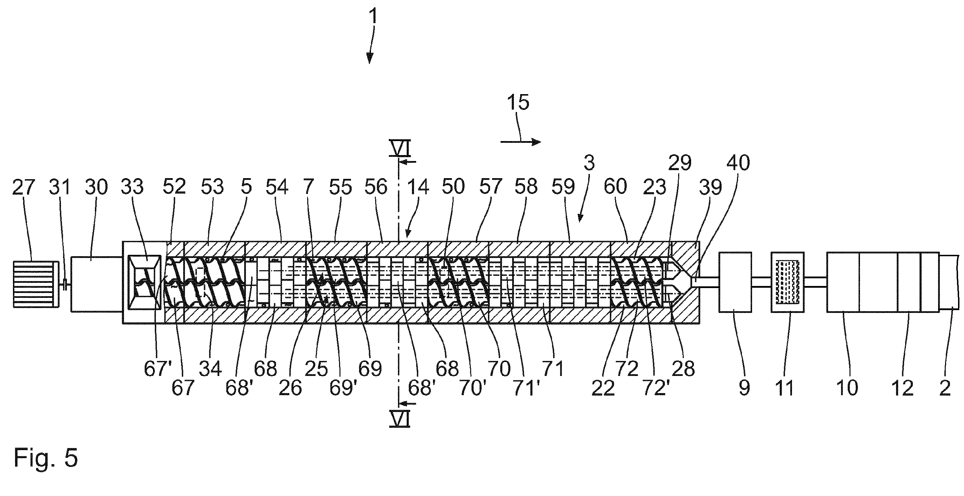

Nachfolgend ist anhand der Fig. 4 bis 6 ein zweites Ausführungsbeispiel der Erfindung beschrieben. Im Unterschied zu dem ersten Ausführungsbeispiel wird das erwärmte Öl 7 durch die zweite Zuführöffnung 34 und eine in der Förderrichtung 15 stromabwärts angeordnete dritte Zuführöffnung 50 in die Gehäusebohrungen 22, 23 zugeführt. Zum Zuführen des erwärmten Öls 7 durch die dritte Zuführöffnung 50 ist eine weitere Dosierpumpe 51 vorgesehen. Das Gehäuse 14 weist entsprechend dem ersten Ausführungsbeispiel mehrere miteinander verbundene Gehäuseabschnitte 52 bis 60 auf, wobei die erste Zuführöffnung 33 in dem Gehäuseabschnitt 52, die zweite Zuführöffnung 34 in dem Gehäuseabschnitt 53 und die dritte Zuführöffnung 50 in dem Gehäuseabschnitt 57 ausgebildet ist.

Die Schneckenmaschine 3 weist in der Förderrichtung 15 eine erste Einzugszone 61, eine Aufschmelz- und Mischzone 62, eine zweite Einzugszone 63, eine Mischzone 64 und eine Druckaufbauzone 65 auf. In der ersten Einzugszone 61 sind Schneckenelemente 67, 67', in der Aufschmelz- und Mischzone 62 Knetelemente 68, 68' und Schneckenelemente 69, 69', in der zweiten Einzugszone 63 Schneckenelemente 70, 70', in der Mischzone 64 Knetelemente 71, 71' und in der Druckaufbauzone 65 Schneckenelemente 72, 72' als Behandlungselemente drehfest auf den Wellen 41, 42 angeordnet. Die Dosierpumpe 51 ist entsprechend der Dosierpumpe 8 in Signalverbindung mit der Steuereinrichtung 13.

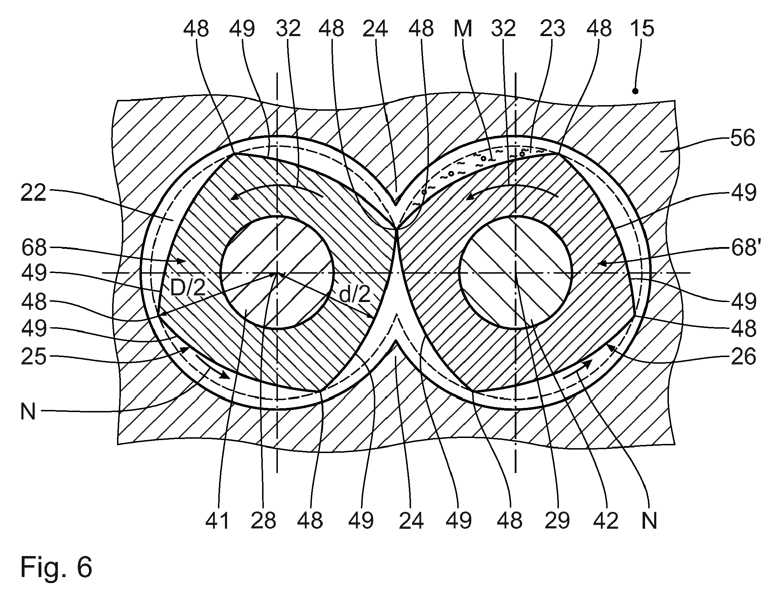

Die Behandlungselemente 67, 67', 68, 68', 69, 69', 70, 70', 71, 71', 72, 72' sind viergängig ausgebildet. Aufgrund der viergängigen Ausbildung weisen die Behandlungselemente 67, 67', 68, 68', 69, 69', 70, 70', 71, 71', 72, 72' vier Kämme 48 und vier dazwischen angeordnete Kurvenabschnitte 49 auf. Dies ist in Fig. 6 beispielhaft anhand der Knetelemente 68, 68' veranschaulicht.

Das pulverförmige Polyethylen 5 wird mittels der gravimetrischen Dosiereinrichtung 4 durch die erste Zuführöffnung 33 in die Gehäusebohrungen 22, 23 zugeführt. Weiterhin wird mittels der Dosierpumpe 8 ein erster Anteil des erwärmten Öls 7 durch die zweite Zuführöffnung 34 in die Gehäusebohrungen 22, 23 zugeführt. Das Polyethylen 5 und das erwärmte Öl 7 werden in der beschriebenen Weise in der Aufschmelz- und Mischzone 62 miteinander vermischt. Anschließend wird in der zweiten Einzugszone 63 ein zweiter Anteil des erwärmten Öls 7 mittels der Dosierpumpe 51 durch die dritte Zuführöffnung 50 in die Gehäusebohrungen 22, 23 zugeführt. Der zweite Anteil des Öls 7 wird anschließend in der Mischzone 64 in das aufgeschmolzene Polyethylen 5 bzw. die in der zweiten Einzugszone 63 vorliegende Mischung eingemischt. Anschließend wird die erzeugte Mischung M in der beschriebenen Weise aus der Schneckenmaschine 3 ausgetragen. Mittels der viergängigen Behandlungselementwellen 25, 26 erfolgt eine intensive Durchmischung.

Durch die erste Zuführöffnung 33 wird entsprechend dem ersten Ausführungsbeispiel 20 Vol.-% bis 50 Vol.-% Polyethylen 5 zugeführt. Durch die zweite Zuführöffnung 34 wird der erste Anteil von 25 Vol.-% bis 55 Vol.-% des erwärmten Öls 7 zugeführt, wohingegen durch die dritte Zuführöffnung 50 der zweite Anteil von 5 Vol.-% bis 25 Vol.-% des erwärmten Öls 7 zugeführt wird. Zusätzlich können entsprechend dem ersten Ausführungsbeispiel Füllstoffe und/oder Additive in die Mischung M zugeführt werden, die bei den vorstehenden Volumenanteilen nicht berücksichtigt sind.

Hinsichtlich des weiteren Aufbaus und der weiteren Funktionsweise der Vorrichtung 1 wird auf die Beschreibung des ersten Ausführungsbeispiels verwiesen.

## Patentansprüche

1. Verfahren zur Herstellung einer Folie für elektrische Energiespeicher umfassend die Schritte:
- Bereitstellen einer Mehrwellen-Schneckenmaschine (3) mit
-- einem Gehäuse (14),
-- mindestens zwei in dem Gehäuse (14) ausgebildeten und einander durchdringenden Gehäusebohrungen (22, 23),
-- mindestens einer in die mindestens zwei Gehäusebohrungen (22, 23) mündenden Zuführöffnung (33, 34; 33, 34, 50),
-- mindestens zwei Behandlungselementwellen (25, 26),
--- die jeweils in einer der mindestens zwei Gehäusebohrungen (22, 23) drehantreibbar angeordnet sind und
--- die jeweils mindestens ein Behandlungselement (43, 43', 44, 44', 45, 45'; 67, 67', 68, 68', 69, 69', 70, 70', 71, 71', 72, 72') aufweisen, das mindestens dreigängig ausgebildet,
- Zuführen von Polyethylen (5) und von erwärmtem Öl (7) durch die mindestens eine Zuführöffnung (33, 34; 33, 34, 50) in die mindestens zwei Gehäusebohrungen (22, 23),
- Erzeugen einer Mischung (M) aus dem Polyethylen (5) und dem Öl (7) mittels der mindestens dreigängigen Behandlungselemente (43, 43', 44, 44', 45, 45'; 67, 67', 68, 68', 69, 69', 70, 70', 71, 71', 72, 72') durch Drehantreiben der mindestens zwei Behandlungselementwellen (25, 26), und
- Herstellen einer Folie (2) aus der erzeugten Mischung (M).

2. Verfahren nach Anspruch 1, **dadurch gekennzeichnet,**
**dass** das erwärmte Öl (7) beim Zuführen eine Temperatur To hat, wobei gilt: 40°C ≤ T_{O} ≤ 150 °C, insbesondere 70°C ≤ T_{O} ≤ 120 °C, und insbesondere 80°C ≤ To ≤ 110 °C.

3. Verfahren nach Anspruch 1 oder 2, **dadurch gekennzeichnet,**
**dass** die mindestens zwei Behandlungselementwellen (25, 26) mit einer Drehzahl N drehangetrieben werden, wobei gilt: 10 U/min ≤ N ≤ 200 U/min, insbesondere 20 U/min ≤ N ≤ 100 U/min, und insbesondere 30 U/min ≤ N ≤ 50 U/min.

4. Verfahren nach einem der Ansprüche 1 bis 3, **dadurch gekennzeichnet,**
**dass** die mindestens dreigängigen Behandlungselemente (43, 43', 44, 44', 45, 45'; 67, 67', 68, 68', 69, 69', 70, 70', 71, 71', 72, 72') als Knetelemente (44, 44'; 68, 68', 71, 71'), insbesondere Knetscheiben, und/oder als Schneckenelemente (43, 43', 45, 45'; 67, 67', 69, 69', 70, 70', 72, 72') ausgebildet sind.

5. Verfahren nach einem der Ansprüche 1 bis 4, **dadurch gekennzeichnet,**
**dass** alle Behandlungselemente (43, 43', 44, 44', 45, 45'; 67, 67', 68, 68', 69, 69', 70, 70', 71, 71', 72, 72') der mindestens zwei Behandlungselementwellen (25, 26) mindestens dreigängig ausgebildet sind.

6. Verfahren nach einem der Ansprüche 1 bis 5, **dadurch gekennzeichnet,**
**dass** die mindestens zwei Behandlungselementwellen (25, 26) eine Länge L und einen Außendurchmesser D haben, wobei gilt: 20 ≤ L/D ≤ 48, insbesondere 24 ≤ L/D ≤ 40, und insbesondere 28 ≤ L/D ≤ 36.

7. Verfahren nach einem der Ansprüche 1 bis 6, **dadurch gekennzeichnet,**
**dass** das Polyethylen (5) eine Verweilzeit tv in der Mehrwellen-Schneckenmaschine (3) hat, wobei gilt: 100 s ≤ tv ≤ 240 s, insbesondere 120 s ≤ t_{V} ≤ 210 s, und insbesondere 140 s ≤ t_{V} ≤ 180 s.

8. Verfahren nach einem der Ansprüche 1 bis 7, **dadurch gekennzeichnet,**
**dass** die Mischung (M) 20 Vol.-% bis 50 Vol.-% Polyethylen (5) und 50 Vol.-% bis 80 Vol.-% Öl (7) umfasst.

9. Verfahren nach einem der Ansprüche 1 bis 8, **dadurch gekennzeichnet,**
**dass** das Öl (7) durch mehrere in einer Förderrichtung (15) beabstandete Zuführöffnungen (34, 50) zugeführt wird.

10. Verfahren nach einem der Ansprüche 1 bis 9, **dadurch gekennzeichnet,**
**dass** die mindestens zwei Behandlungselementwellen (25, 26) einen Außendurchmesser D und einen Kerndurchmesser d haben, wobei gilt: 1,1 ≤ D/d ≤ 1,3.

11. Verfahren nach einem der Ansprüche 1 bis 10, **dadurch gekennzeichnet,**
**dass** die mindestens zwei Behandlungselementwellen (25, 26) gleichsinnig drehangetrieben sind.

12. Verfahren nach einem der Ansprüche 1 bis 11, **dadurch gekennzeichnet,**
**dass** die mindestens zwei Behandlungselementwellen (25, 26) einander dicht kämmend ausgebildet sind.

13. Verfahren nach einem der Ansprüche 1 bis 12, **dadurch gekennzeichnet,**
**dass** mindestens eine Siebeinrichtung (9, 10) zum Reinigen der Mischung (M) in einer Förderrichtung (15) nach der Mehrwellen-Schneckenmaschine (3) angeordnet ist.

14. Verfahren nach einem der Ansprüche 1 bis 13, **dadurch gekennzeichnet,**
**dass** zum Herstellen der Folie (2) eine Schmelzepumpe (11) in einer Förderrichtung (15) vor einer Austragsdüse (12) angeordnet ist.

15. Vorrichtung zur Herstellung einer Folie für elektrische Energiespeicher mit
- einer Vorwärmeinrichtung (6) zum Erwärmen von Öl (7),
- einer Mehrwellen-Schneckenmaschine (3) zum Erzeugen einer Mischung (M) aus einem Polyethylen (5) und erwärmten Öl (7) mit
-- einem Gehäuse (14),
-- mindestens zwei in dem Gehäuse (14) ausgebildeten und einander durchdringenden Gehäusebohrungen (22, 23),
-- mindestens einer in die mindestens zwei Gehäusebohrungen (22, 23) mündenden Zuführöffnung (33, 34; 33, 34, 50) zum Zuführen des Polyethylens (5) und des erwärmten Öls (7),
-- mindestens zwei Behandlungselementwellen (25, 26) zum Mischen des Polyethylens (5) und des erwärmten Öls (7),
--- die jeweils in einer der mindestens zwei Gehäusebohrungen (22, 23) drehantreibbar angeordnet sind und
--- die jeweils mindestens ein Behandlungselement (43, 43', 44, 44', 45, 45'; 67, 67', 68, 68', 69, 69', 70, 70', 71, 71', 72, 72') aufweisen, das mindestens dreigängig ausgebildet ist.
